# EUROPÄISCHE PATENTSCHRIFT

(11) **EP 1 631 484 B1**
(45) Veröffentlichungstag und Bekanntmachung des Hinweises auf die Patenterteilung: **17.09.2008**
(21) Anmeldenummer: 04739327.7
(22) Anmeldetag: 24.05.2004
(51) Int. Cl.: B62D 5/06

(54) **VERFAHREN ZUR STEUERUNG EINES ELEKTRISCHEN PUMPENANTRIEBSMOTORS EINER SERVOLENKVORRICHTUNG**
METHOD FOR CONTROLLING AN ELECTRIC PUMP DRIVE MOTOR OF A POWER STEERING DEVICE
PROCEDE POUR COMMANDER UN MOTEUR D'ENTRAINEMENT DE POMPE ELECTRIQUE D'UN DISPOSITIF DE DIRECTION ASSISTEE

(30) Priorität: 06.06.2003 DE 10325848
(43) Veröffentlichungstag der Anmeldung: 08.03.2006
(73) Patentinhaber: TRW Automotive GmbH, 73553 Alfdorf (DE)
(72) Erfinder: SEIDEL, Mathias, 41462 Neuss (DE)
(74) Vertreter: Strass, Jürgen
(86) Internationale Anmeldenummer: PCT/EP2004/005579
(87) Internationale Veröffentlichungsnummer: WO 2004/108503

(56) Entgegenhaltungen:
- EP-A- 0 673 328
- DE-A- 3 920 862
- US-A- 4 602 695
- US-A- 4 702 335
- US-A- 5 900 704
- US-B1- 6 216 814
- PATENT ABSTRACTS OF JAPAN Bd. 1999, Nr. 14, 22. Dezember 1999 (1999-12-22) -& JP 11 255134 A (KAYABA IND CO LTD), 21. September 1999 (1999-09-21)

## Beschreibung

Die Erfindung betrifft ein Verfahren zur Steuerung eines elektrischen Pumpenantriebsmotors einer Servolenkvorrichtung, bei dem eine hohe Leistungsstufe und eine niedrige Leistungsstufe vorgesehen sind, in denen der Motor betrieben werden kann, wobei eine Umschaltung zwischen den beiden Leistungsstufen in Abhängigkeit von der Stromaufnahme des Motors erfolgt.

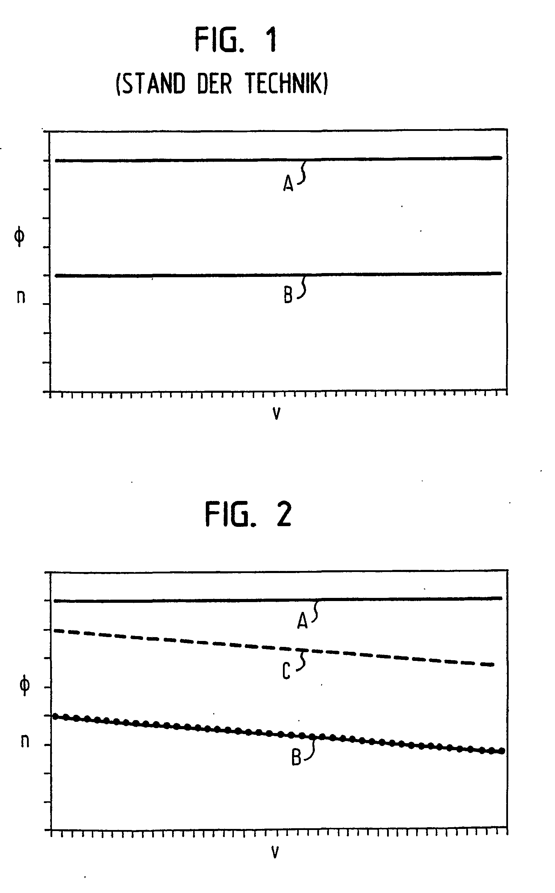

Aus der EP 0 673 328 B2 ist ein solches Verfahren bekannt, bei dem in einer Servolenkvorrichtung eines Kraftfahrzeugs eine Hydraulikpumpe zur Förderung von Hydraulikfluid zu einem Servoventil von einem Elektromotor in zwei definierten Leistungsstufen angetrieben werden kann, einem Stand-by-Betrieb und einem Vollastbetrieb. Wie in dem Diagramm der Figur. 1 dargestellt, wird der Motor im Vollastbetrieb A mit hoher Drehzahl n betrieben, so daß die Pumpe einen hohen hydraulischen Fluß φ erzeugt. Im Stand-by-Betrieb B ist die Motordrehzahl n so weit reduziert, daß nur noch ein geringer Hydraulikkreislauf aufrechterhalten wird. Bei erhöhtem Leistungsbedarf der Pumpe wird der Motor in den Vollastbetrieb A, im umgekehrten Fall wieder zurück in den Stand-by-Betrieb B geschaltet. Als Maß für die Leistungsanforderung der Hydraulikpumpe wird die Stromaufnahme des Motors mittels eines Stromsensors erfaßt. Der Stromsensor ist mit einer Steuereinheit verbunden, die die Werte des Stromsensors auswertet und gegebenenfalls eine Umschaltung aus einer Leistungsstufe des Motors in die andere vornimmt.

Die beiden Leistungsstufen A, B sind, wie aus dem Diagramm der Figur 1 hervorgeht, unabhängig von der Geschwindigkeit v des Fahrzeugs. Auf eine Anpassung der Leistungsstufen A, B an die Fahrzeuggeschwindigkeit v, d.h. ein Absenken der Motordrehzahl n und damit des hydraulischen Flusses φ bei Erhöhung der Fahrzeuggeschwindigkeit wird verzichtet, da bei einem solchen Absenken im Bedarfsfall (z.B. in fahrdynamisch anspruchsvollen Situationen mit plötzlichen, schnellen Lenkmanövern) nicht genügend Volumenstrom zur Verfügung gestellt werden kann, um die notwendige Lenkunterstützung zu liefern.

Ein Verfahren mit den Merkmalen des Oberbegriffs des Anspruchs 1 ist aus der DE 39 29 862 A1 bekannt. Je nach Fahrzeuggeschwindigkeit erfolgt bei Bedarf eine Umschaltung zwischen der niedrigen Leistungsstufe und der hohen Leistungsstufe (bei Geschwindigkeiten unter 20 km/h) oder zwischen der niedrigen Leistungsstufe und der mittleren Leistungsstufe (bei Geschwindigkeiten zwischen 20 km/h und 65 km/h). Der Bedarf wird im Falle einer Überschreitung einer Lenkmomentschwelle erkannt. Dabei wird die Stromaufnahme des Motors als Indikator für das Lenkmoment verwendet.

Aufgabe der Erfindung ist es, ein Verfahren zur Steuerung eines elektrischen Pumpenantriebsmotors einer Servolenkvorrichtung zu schaffen, das einen verbesserten Bedienungskomfort, insbesondere bei wechselnden Fahrsituationen und -bedingungen, ermöglicht.

Erfindungsgemäß wird dies durch ein Verfahren zur Steuerung eines elektrischen Pumpenantriebsmotors einer Servolenkvorrichtung erreicht, bei dem eine hohe Leistungsstufe (im folgenden "Vollast" genannt) und eine niedrige Leistungsstufe (im folgenden "Stand-by" genannt) vorgesehen sind, in denen der Motor betrieben werden kann; eine Umschaltung zwischen den beiden Leistungsstufen erfolgt in Abhängigkeit der Stromaufnahme des Motors; zwischen der hohen Leistungsstufe und der niedrigen Leistungsstufe ist wenigstens eine weitere, mittlere Leistungsstufe (im folgenden "Last" genannt) vorgesehen, wobei der Motor in Abhängigkeit der Stromaufnahme aus der niedrigen Leistungsstufe je nach Bedarf entweder direkt in die hohe Leistungsstufe oder zunächst nur in die mittlere Leistungsstufe umgeschaltet werden kann.

Die Leistungsstufe Last stellt eine Zwischenstufe zwischen den beiden anderen Betriebsarten des Motors dar und erlaubt eine flexiblere Anpassung der Pumpenleistung an die jeweils herrschenden Anforderungen. So kann der Motor beispielsweise aus dem Stand-by-Betrieb je nach Bedarf entweder direkt in den Vollastbetrieb oder zunächst nur in den Lastbetrieb umgeschaltet werden. Entsprechendes gilt für das Verlassen des Vollastbetriebes.

Vorzugsweise erfolgt die Umschaltung des Motors zwischen den einzelnen Leistungsstufen in Abhängigkeit wenigstens eines weiteren Leistungsparameters, um die Kriterien für ein Umschalten des Motors weiter zu verfeinern. Als weitere Parameter kommen insbesondere die absolute Stromaufnahme entsprechend der Last der vom Motor angetriebenen Pumpe und/oder die zeitabhängige Änderung der Stromaufnahme in Betracht, die repräsentativ für die Dynamik der lenkungsbezogenen Fahrsituation und somit ein Maß für den Volumenstrombedarf ist.

Eine Weiterbildung der Erfindung sieht vor, daß wenigstens eine der Leistungsstufen in Abhängigkeit wenigstens eines Leistungsparameters verändert wird. Darunter ist zu verstehen, daß während des Betriebs des Motors in einer Leistungsstufe die Motordrehzahl in Abhängigkeit des Leistungsparameters verändert wird, ohne daß in eine andere Leistungsstufe umgeschaltet wird. Somit kann der Bedienkomfort innerhalb einer Leistungsstufe verbessert werden. Vorzugsweise ist ein Leistungsparameter die Fahrzeuggeschwindigkeit, so daß eine geschwindigkeitsabhängige Anpassung der Leistungsstufe realisiert werden kann.

Um Ungleichmäßigkeiten im Lenkgefühl und unnötige schnelle Wechsel zwischen den Leistungsstufen zu vermeiden, schlägt die Erfindung vor, daß wenigstens eine der folgenden Umschaltungen durch eine allmähliche Änderung der Drehzahl des Motors und/oder nach einer Verzögerungszeit erfolgt:
- aus der niedrigen Leistungsstufe in die mittlere Leistungsstufe;
- aus der hohen Leistungsstufe in die mittlere Leistungsstufe;
- aus der mittleren Leistungsstufe in die niedrige Leistungsstufe.

Weitere Merkmale und Vorteile der Erfindung ergeben sich aus der nachfolgenden Beschreibung und aus den beigefügten Zeichnungen, auf die Bezug genommen wird. In den Zeichnungen zeigen:
- Figur 1 eine Diagrammdarstellung der Betriebsarten eines Pumpenantriebsmotors bei einem Verfahren gemäß dem Stand der Technik; und
- Figur 2 eine Diagrammdarstellung der Betriebsarten eines Pumpenantriebsmotors bei einem Verfahren gemäß der Erfindung.

In dem bereits erläuterten Diagramm der Figur 1 sind die beiden Leistungsstufen Stand-by A und Vollast B in Abhängigkeit der Fahrzeuggeschwindigkeit v bei einem Verfahren nach dem Stand der Technik dargestellt. Die Drehzahl des Motors n und der damit erreichte hydraulische Fluß φ bleiben bei steigender Fahrzeuggeschwindigkeit v konstant.

Figur 2 zeigt die Leistungsstufen in Abhängigkeit der Fahrzeuggeschwindigkeit v bei einem erfindungsgemäßen Verfahren. Zwischen den Leistungsstufen Vollast A und Stand-by B ist eine dritte Leistungsstufe Last C vorgesehen. Während die Drehzahl n des Pumpenantriebsmotors bei der Leistungsstufe Vollast A konstant bleibt, fällt die Drehzahl n bei den beiden Leistungsstufen Last C und Stand-by B mit der Fahrzeuggeschwindigkeit v ab. Neben dem in Figur 2 beispielhaft gezeigten linearen Abfall sind auch andere Abhängigkeiten möglich.

Die Umschaltung zwischen den verschiedenen Leistungsstufen durch eine Steuereinheit wird in Abhängigkeit der Stromaufnahme des Motors und der zeitabhängigen Änderung der Stromaufnahme gesteuert. Die Stromaufnahme wird der Steuereinheit als Eingangsgröße von einem Stromsensor zugeführt, wobei vom Steuergerät die Zeitabhängigkeit der Stromaufnahme ermittelt wird.

Im folgenden wird beispielhaft eine mögliche Anwendung des erfindungsgemäßen Verfahrens beschrieben. Bei konstant geringer Stromaufnahme des Motors wird in den Stand-by-Betrieb B geschaltet, sofern der Motor nicht schon in dieser Leistungsstufe betrieben wird. Sobald ein vorgegebener Stromschwellenwert überschritten wird, entscheidet eine Auswertelogik der Steuereinheit, ob in die Leistungsstufe Last C oder in die Leistungsstufe Vollast A umgeschaltet wird. Bei niedriger Stromanstiegsgeschwindigkeit, entsprechend langsamen Lenkbewegungen, wird in die Leistungsstufe Last C geschaltet, bei hoher Stromanstiegsgeschwindigkeit, entsprechend schnellen Lenkbewegungen (z.B. bei einem Ausweichmanöver), wird in die Leistungsstufe Vollast A geschaltet. Der Übergang in die Leistungsstufe Last C kann so realisiert sein, daß er nicht durch einen abrupten, sondern durch einen allmählichen Anstieg der Motordrehzahl n erfolgt, um den Fahrer nicht durch eine plötzliche Änderung des Lenkgefühls zu irritieren. Sollte während der Betriebsart Last C eine hohe Stromanstiegsgeschwindigkeit detektiert werden, die auf schnelle Lenkbewegungen zurückzuführen ist, kann jederzeit in die Betriebsart Vollast A umgeschaltet werden.

Die Leistungsstufe Vollast A wird verlassen, wenn die Stromaufnahme des Motors sinkt oder die zeitabhängige Stromaufnahme dI/dt einen vorbestimmten Wert unterschreitet, wobei vor dem tatsächlichen Umschalten eine Verzögerungszeit vorgesehen werden kann. Durch allmähliches Absenken der Motordrehzahl n wird in die Leistungsstufe Last C geschaltet. Sinkt die (zeitabhängige) Stromaufnahme weiter unter einen vorgegebenen Schwellenwert, wird in die Leistungsstufe Stand-by B geschaltet, wobei wiederum eine Verzögerungszeit und/oder ein sanfter Übergang durch eine Drehzahlrampe vorgesehen werden können.

Der Einsatz von Mikroprozessortechnik ermöglicht es, insbesondere für die Leistungsstufen Last C und Stand-by B beliebige Abhängigkeiten der Motordrehzahl n und damit des hydraulischen Flusses φ von der Fahrzeuggeschwindigkeit v zu programmieren, um eine optimale Anpassung der Lenkung an das Fahrverhalten des Fahrzeugs zu erreichen. Durch die in Figur 2 dargestellte Absenkung der Leistungsstufe Stand-by B mit zunehmender Fahrzeuggeschwindigkeit v wird die Stromaufnahme in dieser Leistungsstufe gesenkt, so daß sich die Differenz zum vorgegebenen Schwellenwert für die Umschaltung in die Leistungsstufe Last C bzw. Vollast B vergrößert. Dadurch wird bei hohen Fahrzeuggeschwindigkeiten der Effekt der Fahrzeuggeschwindigkeitsabhängigkeit der Lenkung weiter verstärkt, da im Vergleich zu niedrigen Fahrzeuggeschwindigkeiten erst bei einem größeren Anstieg des Motorstroms in die Leistungsstufe Last C bzw. Vollast A umgeschaltet wird. Falls dies jedoch nicht gewünscht ist, läßt sich der Effekt durch geeignete Maßnahmen kompensieren (z.B. durch einen geschwindigkeitsabhängigen Schwellenwert).

Neben der mittleren Leistungsstufe C können bei dem erfindungsgemäßen Verfahren auch noch weitere Leistungsstufen zwischen Vollast A und Stand-by B vorgesehen sein, in die der Pumpenantriebsmotor umgeschaltet werden kann.

Die mögliche Veränderung der Leistungsstufen wurde am Beispiel einer Abhängigkeit der Leistungsstufen B und C von der Fahrzeuggeschwindigkeit v beschrieben. Es ist jedoch auch eine Veränderung einer oder mehrerer Leistungsstufen in Abhängigkeit eines anderen oder mehrerer Parameter möglich.

## Patentansprüche

1. Verfahren zur Steuerung eines elektrischen Pumpenantriebsmotors einer Servolenkvorrichtung, bei dem eine hohe Leistungsstufe (A) und eine niedrige Leistungsstufe (B) vorgesehen sind, in denen der Motor betrieben werden kann, wobei eine Umschaltung zwischen den beiden Leistungsstufen (A, B) in Abhängigkeit der Stromaufnahme des Motors erfolgt, und wobei zwischen der hohen Leistungsstufe (A) und der niedrigen Leistungsstufe (B) wenigstens eine weitere, mittlere Leistungsstufe (C) vorgesehen ist, **dadurch gekennzeichnet, daß** der Motor in Abhängigkeit der Stromaufnahme aus der niedrigen Leistungsstufe (B) je nach Bedarf entweder direkt in die hohe Leistungsstufe (A) ober zunächst nur in die mittlere Leistungsstufe (C) umgeschaltet werden kann.

2. Verfahren nach Anspruch 1, **dadurch gekennzeichnet, daß** die Umschaltung des Motors zwischen den einzelnen Leistungsstufen (A, B, C) in Abhängigkeit wenigstens eines weiteren Umschaltparameters erfolgt.

3. Verfahren nach Anspruch 2, **dadurch gekennzeichnet, daß** ein Umschaltparameter die absolute Stromaufnahme entsprechend der Last der vom Motor angetriebenen Pumpe ist.

4. Verfahren nach Anspruch 2 oder 3, **dadurch gekennzeichnet, daß** ein Umschaltparameter die zeitabhängige Änderung der Stromaufnahme ist.

5. Verfahren nach einem der vorhergehenden Ansprüche, **dadurch gekennzeichnet, daß** wenigstens eine der Leistungsstufen (A, B, C) in Abhängigkeit wenigstens eines Leistungsparameters verändert wird.

6. Verfahren nach Anspruch 5, **dadurch gekennzeichnet, daß** ein Leistungsparameter die Fahrzeuggeschwindigkeit (v) ist.

7. Verfahren nach Anspruch 6, **dadurch gekennzeichnet, daß** die Leistungsstufe so verändert wird, daß bei steigender Fahrzeuggeschwindigkeit (v) die Drehzahl des Motors (n) sinkt.

8. Verfahren nach einem der Ansprüche 5 bis 7, **dadurch gekennzeichnet, daß** die Veränderung der Leistungsstufe linear zu einer Veränderung des Leistungsparameters erfolgt.

9. Verfahren nach einem der vorhergehenden Ansprüche, **dadurch gekennzeichnet, daß** wenigstens eine der folgenden Umschaltungen durch eine allmähliche Änderung der Drehzahl (n) des Motors und/oder erst nach einer Verzögerungszeit erfolgt:
- aus der niedrigen Leistungsstufe (B) in die mittlere Leistungsstufe (C);
- aus der hohen Leistungsstufe (A) in die mittlere Leistungsstufe (C);
- aus der mittleren Leistungsstufe (C) in die niedrige Leistungsstufe (B).

## Claims

1. A method for controlling an electric pump drive motor of a power steering device, in which a high output stage (A) and a low output stage (B) are provided, in which the motor can be operated, a switchover between the two output stages (A, B) taking place as a function of the current consumption of the motor, and at least one further, middle output stage (C) being provided between the high output stage (A) and the low output stage (B), **characterized in that** the motor can be switched over as a function of the current consumption from the low output stage (B) either directly into the high output stage (A) or first only into the middle output stage (C), as required.

2. The method according to claim 1, **characterized in that** the switchover of the motor between the individual output stages (A, B, C) takes place as a function of at least one further switchover parameter.

3. The method according to claim 2, **characterized in that** one switchover parameter is the absolute current consumption according to the load of the pump driven by the motor.

4. The method according to claim 2 or 3, **characterized in that** one switchover parameter is the time-dependent change of the current consumption.

5. The method according to any of the preceding claims, **characterized in that** at least one of the output stages (A, B, C) is changed as a function of at least one output parameter.

6. The method according to claim 5, **characterized in that** one output parameter is the vehicle velocity (v).

7. The method according to claim 6, **characterized in that** the output stage is changed such that with increasing vehicle velocity (v) the speed of the motor (n) decreases.

8. The method according to any of claims 5 to 7, **characterized in that** the change of the output stage takes place linearly to a change of the output parameter.

9. The method according to any of the preceding claims, **characterized in that** at least one of the following switchovers takes place by a gradual change of the speed (n) of the motor and/or only after a delay time:
- from the low output stage (B) into the middle output stage (C);
- from the high output stage (A) into the middle output stage (C);
- from the middle output stage (C) into the low output stage (B).

## Revendications

1. Procédé de commande d'un moteur électrique d'entraînement de pompe d'un dispositif de direction assistée, dans lequel sont prévus un étage de haute puissance (A) et un étage de faible puissance (B), dans lesquels le moteur peut fonctionner, une commutation entre les deux étages de puissance (A, B) ayant lieu en fonction de la consommation de courant du moteur, et au moins un autre étage de moyenne puissance (C) étant prévu entre l'étage de haute puissance (A) et l'étage de faible puissance (B), **caractérisé en ce que** le moteur peut être commuté en fonction de la consommation de courant depuis l'étage de faible puissance (B), selon les besoins, soit directement dans l'étage de haute puissance (A) ou tout d'abord seulement dans l'étage de moyenne puissance (C).

2. Procédé selon la revendication 1, **caractérisé en ce que** la commutation du moteur entre les étages de puissance (A, B, C) individuels a lieu en fonction d'au moins un autre paramètre de commutation.

3. Procédé selon la revendication 2, **caractérisé en ce qu'**un paramètre de commutation est la consommation de courant absolue correspondant à la charge de la pompe entraînée par le moteur.

4. Procédé selon la revendication 2 ou 3, **caractérisé en ce qu'**un paramètre de commutation est la variation de la consommation de courant en fonction du temps.

5. Procédé selon l'une des revendications précédentes, **caractérisé en ce que** au moins un des étages de puissance (A, B, C) varie en fonction d'au moins un paramètre de puissance.

6. Procédé selon la revendication 5, **caractérisé en ce qu'**un paramètre de puissance est la vitesse du véhicule (v).

7. Procédé selon la revendication 6, **caractérisé en ce que** l'étage de puissance est modifiée de telle sorte qu'en cas d'augmentation de la vitesse du véhicule (v), la vitesse de rotation du moteur (n) diminue.

8. Procédé selon l'une des revendications 5 à 7, **caractérisé en ce que** la modification de l'étage de puissance a lieu de manière linéaire par rapport à une modification du paramètre de puissance.

9. Procédé selon l'une des revendications précédentes, **caractérisé en ce qu'**au moins une des commutations suivantes a lieu par une modification progressive de la vitesse de rotation (n) du moteur et/ou seulement après un temps de retard:
- depuis l'étage de faible puissance (B) jusque dans l'étage de moyenne puissance (C) ;
- depuis l'étage de haute puissance (A) jusque dans l'étage de moyenne puissance (C) ;
- depuis l'étage de moyenne puissance (C) jusque dans l'étage de faible puissance (B).
